# EUROPEAN PATENT APPLICATION

(11) **EP 4 180 740 A1**
(43) Date of publication of application: **17.05.2023**
(21) Application number: 22206602.9
(22) Date of filing: 10.11.2022
(51) Int. Cl.: F24H 8/00

(54) **CONDENSING BOILER WITH AN IMPROVED CONDENSATE DRAIN CIRCUIT**

(30) Priority: 12.11.2021 IT 202100028844
(71) Applicant: Riello S.p.A., 37045 Legnago (IT)
(72) Inventor: CIOFOLO, Noè, 37045 Legnago (VR) (IT)
(74) Representative: Studio Torta S.p.A.

(57) **Abstract**

A condensing boiler comprising: a casing; a burner housed in the casing and configured to produce heating gas; a heat exchanger housed in the casing, the heat exchanger being supplied with the heating gas from the burner and configured to heat a working fluid; and a drain circuit configured to drain the condensate generated by the condensation of the heating gas in the heat exchanger; the drain circuit comprising a siphon housed in the casing and an external drain duct; in which the casing comprises a bottom wall provided with a drain hole where the condensate passes from the siphon to the external drain duct; wherein the external duct is coupled to the bottom wall of the casing independently from the siphon in such a way that even without the siphon the external drain duct remains coupled to the casing.

## Description

### Cross-reference to related applications

This Patent Application claims priority from Italian Patent Application No. 102021000028844 filed on November 12, 2021.

### Technical field

The technical field of this invention relates to condensing boilers, i.e., a particular type of boiler with specific and peculiar features and requirements, such as involving the discharge of the condensate that is created during use. Within this technical field, this invention will deal with the problem of how to improve the condensate drain circuit, i.e., how to improve the cooperation between the condensate drain siphon housed inside the casing of the boiler and the outer duct.

### State of the art

As known, a condensing boiler is a device in which heat is exchanged between working fluid to be heated (usually water) and hot smoke produced by combustion of air and fuel gas. To this end, a condensing boiler comprises a burner, which is configured to release the above-mentioned heating gases, and a heat exchanger in which the hot gases are introduced, heating water circulating in special coils. These two components (burner and heat exchanger) are housed inside the casing, which has separate inlet openings for the gas and water to heat, and separate outlet openings for the combustion fumes and heated water.

Due to heat migration from hot smoke to water, the water vapour in the smoke is transformed into condensate. This condensate settles by gravity in the lower portion of the heat exchanger, also called condensate collection well, and from this well must be drained. To drain the condensate inside the boiler casing, there is a siphon on one side connected to the above-mentioned well and, on the other side, on the bottom wall of the casing of the boiler, connected to an external drain duct. The use of this siphon is known because, in this way, you avoid the combustion fumes' being discharged through the condensate drain duct.

According to the prior art, the connection between the siphon and the drain duct occurs in the following way. The bottom wall of the boiler casing comprises a hole from which part of the siphon projects and on whose projecting end the duct is directly connected. The term "directly connected" means that, once the joining of the free ends of the siphon and the duct is released, they are not connected to other elements of the boiler that may, in some way, bind them or stabilise them in the correct position for a new connection. In this condition, thus, any siphon or drain duct maintenance or replacement operations also require operations aimed at maintaining or repositioning these elements at the site.

### Description of the invention

It is thus, one purpose of this invention to produce a condensing boiler in which the condensate drain circuit, in particular the coupling between siphon and drain duct, is improved, i.e., reliable, simple, and, at the same time, offers advantages if one of the two elements has to be overhauled or replaced.

In accordance with this invention, a condensing boiler is produced comprising an outer casing that houses:
- a burner configured to produce heating gases;
- a heat exchanger supplied with the heating gas from the burner and configured to heat a working fluid; and
- a drain circuit configured to drain the condensate generated by the condensation of the heating gas in the heat exchanger; wherein the drain circuit comprises a siphon housed inside the casing and an external drain duct.

The elements mentioned above, and how they are connected together, is a subject well known to the person skilled in the art and, thus, other details are not necessary. For example, mentioning the fact that on the bottom of the heat exchanger there is a portion for collecting condensate coupled to one end of the siphon is an example of a detail that is implicit and known.

As known, the bottom wall of the casing is provided with a drain hole where the condensate passes from the siphon to the outer duct; in fact, the external end of the siphon is housed astride this hole.

In this configuration, according to the prior art, the siphon and the outer duct would be directly coupled to each other, outside the casing, i.e., the drain duct would be coupled to the part of the siphon projecting beyond the drain hole of the bottom wall of the casing.

In contrast, and in an inventive way, according to the invention, the coupling between the second end of the siphon and the outer duct, there is no direct coupling by contact between these two elements, but their coupling to create the condensate drain circuit is mediated by the bottom wall of the casing to which the outer duct is coupled directly and independently of the siphon. "Independent coupling" means that, even without the siphon, the duct remains in position, coupled to the casing.

Advantageously, during maintenance and repair wherein the siphon must be disassembled, there is no longer the need to also keep the outer duct, which is already ready in position, in position.

According to a preferred embodiment of the invention, at the drain hole, the bottom wall of the casing comprises a sleeve projecting outside the casing and configured to receive, inside, part of the end of the siphon and to be coupled with the drain duct. In particular, the end of the sleeve has dimensions so that it is housed inside the drain duct. In this case, a cable tie may be used to tighten the duct to the sleeve.

Thus, according to this example, the drain circuit comprises, in series, three elements, i.e., the siphon inside the casing, the duct outside the casing, and the sleeve straddling the hole and comprising independent portions cooperating with the siphon and the duct.

The first portion of the sleeve housing the end of the siphon preferably has a greater radius than the second outer portion that is inserted in the outer duct. In this way, in correspondence with the reduction of the radius, an inner step is created, which acts as an abutment for the end of the siphon and an outer step acting as an abutment for the duct. These steps facilitate the assembly steps since they create end-stop elements.

Specifically, the figures will show an end of the siphon with a particular form that is also suitable for other purposes, such as, for example, coming out of the shelf and connecting directly to other components.

The sleeve also preferably comprises a portion projecting inside of the casing and that is configured to be coupled and to guide the portion of the outer end of the siphon straddling the drain hole. This inner portion of the sleeve has a greater radius than the first outer portion of the outer sleeve and acts as an abutment for a widened head of the second end of the siphon. In this example, thus, if the inner and outer portions of the sleeve are considered as a single element, a sleeve is formed that comprises three portions with decreasing radii from the inside towards the outside of the casing.

A cable tie for tightening the duct on the sleeve may, preferably, be provided.

The sleeve and the bottom wall preferably consist of a single piece.

A seal between the sleeve and the end of the siphon may, preferably, be provided. This seal may be shaped like a common ring to be positioned during the assembly or the seal may be directly obtained for co-moulding the bottom so as to reduce the components and facilitate the assembly steps.

### List of drawings

Further features and advantages of this invention will be apparent from the following description of a non-limiting embodiment thereof, with reference to the accompanying drawings, wherein:
- Figure 1 is a schematic view of a condensing boilers;
- Figures 2 and 3 are enlarged views of the detail indicated in Figure 1 with reference II according to two use modes.

### Description of an embodiment of the invention

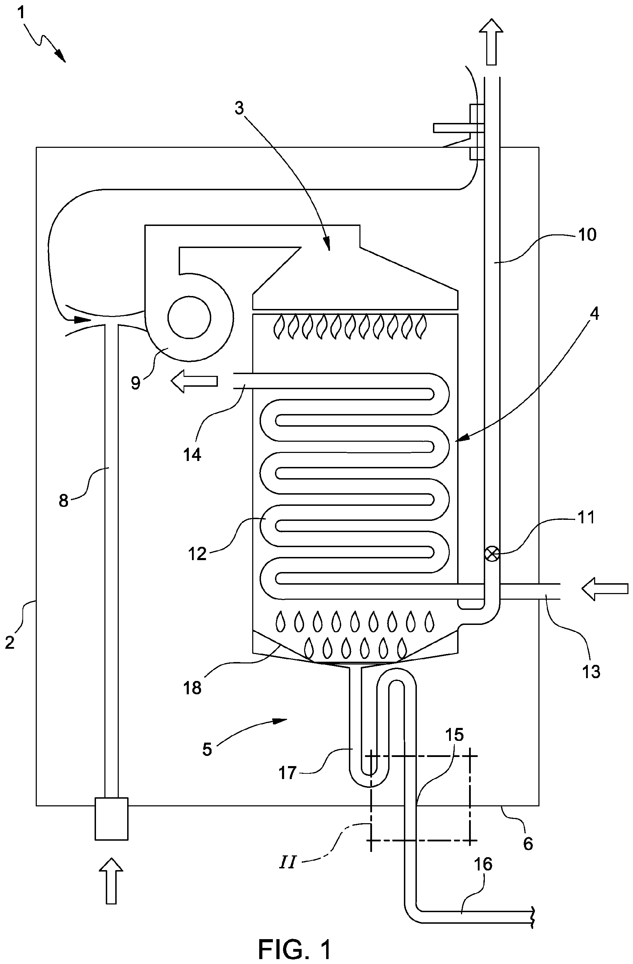

With reference to Figure 1, the reference number 1 globally denotes a boiler of the "condensing" type. The condensing boiler 1 comprises an outer case or casing 2; a burner 3, which is arranged inside the outer casing 2 and is configured to produce heating gases; a heat exchanger 4, which is arranged inside the outer casing 2, is supplied with heating gases by the burner 3 and is configured to heat a working fluid; and a drain circuit 5, which is arranged downstream of the heat exchanger 4. A first part of the drain circuit 5 comprises a siphon 17 housed inside the outer casing 2 and configured to convey to an external drain duct 6 the condensate generated by the condensation, at least partial, of the heating gases in the heat exchanger 4. As known, in this example, the condensing boiler 1 comprises an air supply duct 7; a gas supply duct 8; a suction device 9 configured to suck air and gas through respective ducts 8 and 9 and to convey the air and gas sucked up to the burner 3; a duct 10 for discharging heating gases; and a suction device 11 configured to suck the heating gases and convey them outside the condensing boiler 1 through the duct 10. The outer casing 2 encloses the burner 3, the heat exchanger 4, and the discharge assembly 5. The heat exchanger 4 comprises a coil duct 12 for supplying working fluid, which has an inlet portion 13 for the introduction of the working fluid in the condensing boiler 1 and an outlet portion 14 for discharging the working fluid from the condensing boiler 1. As known, the siphon 17 is configured to convey the condensate from a collection tank 18 where it is collected in the heat exchanger 4, towards the external drain duct 16 for the condensate and, at the same time, to hinder the passage of the heating gases through the siphon 17.

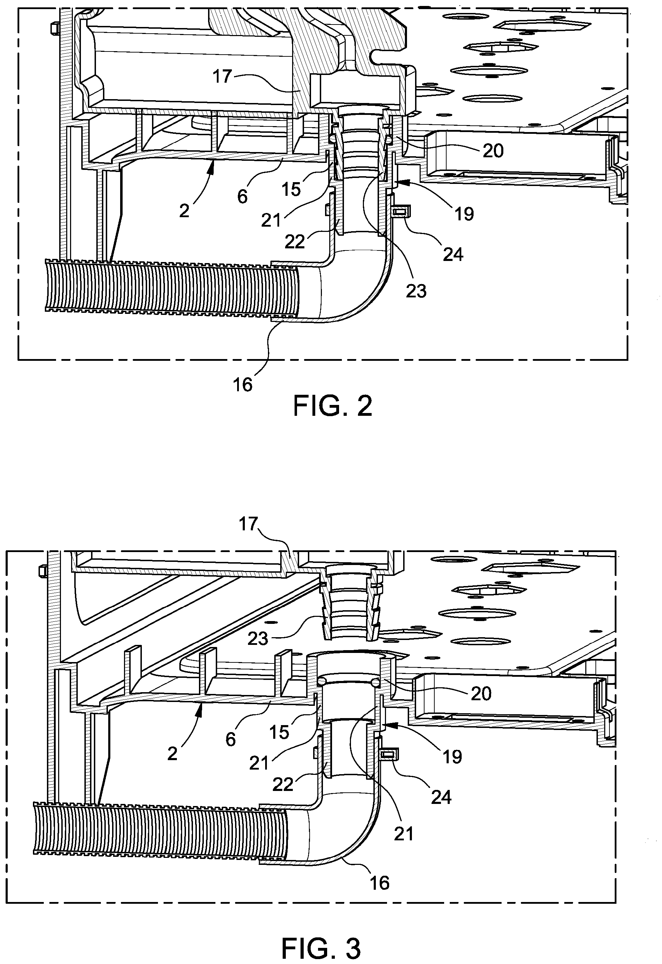

Figure 2 shows an enlarged view of the detail indicated as II in Figure 1. In particular, Figure 2 makes it possible to appreciate a concrete and particularly advantageous mode of implementing this invention, i.e., providing a condensate drain circuit in a condensing boiler wherein the inner siphon and the outer duct are not coupled to each other by direct contact but their cooperation to create the circuit is mediated by a third element, and the duct is actually bound to this third element, preferably the bottom wall of the casing. According to the embodiment shown in Figure 2, the bottom wall 6 of the casing 2 comprises a drain hole 15 where there is a sleeve 19 comprising an inner portion 20 that projects inside the casing 2 and an outer portion 21, 22, which projects outside the casing 2. The outer portion 21, 22 can be divided in two sub-portions, i.e., a first outer portion 21 that extends from the hole 15 and a second, more outer portion 22 that has a smaller radius. As can be seen, the inner portion 20 has a greater radius than the outer first portion 21. The size and shape of the end 23 of the siphon 17 and of the portions of the sleeve 19 are such so that the end 23 penetrates the sleeve 19 inside the casing and extends until the passage between the first 21 and the second 22 outer portion (where there is a special abutment step) basically straddling the hole 15. The second outer portion 22 is inserted in the end of the duct 16 which is bound in this position by a cable tie 24. In this case too, the size of the duct 16 and of the second portion 22 are such that the coupling is stable, i.e., the inner radius of the duct is basically equal to the outer radius of the second portion 22 of the sleeve 16. According to this example, then, the drain circuit 5 comprises three elements in series: the siphon 17, the sleeve 19, and the duct 16 wherein the duct 16 is bound to the sleeve 19 independently of the siphon 17. "Independently" means what is shown in Figure 3, i.e., the fact that the duct remains firmly in place coupled to the sleeve 19 even without the siphon 17, making any maintenance or replacement of damaged components easier.

The coupling between the end 23 of the siphon 17 and the hole 15 with the sleeve 19 can be made in many different ways, including to provide for the distancing of the duct 16 with the siphon 17 firmly in place.

Finally, it is clear that, variations can be made to this invention in relation to the embodiments shown in the figures without, however, departing from the scope of protection of the attached claims. For example, the arrangement of the duct and the siphon in relation to the sleeve may also be inverted with the duct that partially penetrates the hole inside of the sleeve and the siphon that houses a more internal part of the sleeve itself.

## Claims

1. A condensing boiler (1) comprising:
- a casing (2);
- a burner (3) housed inside the casing (2) and configured to produce heating gas;
- a heat exchanger (4) housed inside the casing (2), the heat exchanger (4) being supplied with the heating gas from the burner (3) and configured to heat a working fluid; and
- a drain circuit (5) configured to drain the condensate generated by the condensation of the heating gas in the heat exchanger (4); the drain circuit (5) comprising a siphon (17) housed inside the casing (2) and an external drain duct (16);
in which the casing comprises a bottom wall (6) provided with a drain hole (15) where the condensate passes from the siphon (17) to the external drain duct (16);
the boiler (1) being **characterized by** the fact that the external drain duct (16) is coupled to the bottom wall (6) of the casing (2) independently from the siphon (17) in such a way that even without the siphon (17) the external drain duct (16) remains coupled to the casing (2).

2. The boiler as claimed in claim 1, wherein at the drain hole (15) the casing (2) comprises a sleeve (19) projecting outwardly from the casing (2), the sleeve (19) being configured to internally house part of an end (23) of the siphon (17) and to be at least partially housed within an end of the drain duct (16).

3. The boiler as claimed in claim 2, wherein the sleeve (19) comprises a first portion (21) having a larger radius extending from the drain hole (15) and a second outer portion (22) having a smaller radius.

4. The boiler as claimed in claim 2 or 3, wherein the sleeve (19) comprises an inner portion (20) projecting inwardly from the casing (2).

5. The boiler as claimed in claim 4, wherein the inner portion (20) of the sleeve (19) has a radius greater than the first outer portion (21) of the sleeve (19).

6. The boiler as claimed in any one of the preceding claims 2 to 5, wherein a cable tie (24) for tightening the duct (16) on the sleeve (19) is provided.

7. The boiler as claimed in any one of the preceding claims 2 to 6, wherein the sleeve (19) and the bottom wall (6) are made in one piece.

8. The boiler as claimed in any one of the preceding claims 2 to 7, wherein a seal is provided between the sleeve (19) and the end (23) of the siphon (17).
